# EUROPEAN PATENT SPECIFICATION

(11) **EP 3 608 127 B1**
(45) Date of publication and mention of the grant of the patent: **30.12.2020**
(21) Application number: 19189749.5
(22) Date of filing: 02.08.2019
(51) Int. Cl.: B60C 1/00, B60C 11/00, B60C 11/04, B60C 11/03

(54) **PNEUMATIC TIRE**
LUFTREIFEN
PNEUMATIQUE

(30) Priority: 07.08.2018 JP 2018148449
(43) Date of publication of application: 12.02.2020
(73) Proprietor: Sumitomo Rubber Industries, Ltd., Kobe-shi, Hyogo-ken 651-0072 (JP)
(72) Inventor: NAKATANI, Masako, Kobe-shi, Hyogo-ken 651-0072 (JP)
(74) Representative: Manitz Finsterwald Patent- und Rechtsanwaltspartnerschaft mbB

(56) References cited:
- EP-A1- 0 864 446
- EP-A1- 1 630 004
- EP-A1- 2 749 404
- EP-A1- 3 318 421

## Description

### TECHNICAL FIELD

The present invention relates to a pneumatic tire.

### BACKGROUND ART

Pneumatic tires such as tires for passenger vehicles or heavy load vehicles require handling stability and grip performance such as wet grip performance from safety and other standpoints. For example, a conventional solution is to use a block pattern tread. It is also known to be effective to increase the number of horizontal or vertical grooves or groove volume, for example.

Attempts have been made to improve properties such as handling stability by providing sipes in the tread portion of a pneumatic tire. For example, Patent Literature 1 proposes a pneumatic tire which includes middle land portions provided with specific horizontal middle grooves with specific groove bottom sipes to improve properties such as handling stability on dry roads.

A pneumatic tire according to the preamble of claim 1 is disclosed in EP 1 630 004 A1.

In EP 2 749 404 A1 rubber compositions for treads of pneumatic tires are disclosed which have silica in an amount of 40 to 120 parts by mass, based on 100 parts by mass of the rubber component.

A tread with horizontal shoulder grooves is disclosed in EP 3 318 421 A1.

EP 0 864 446 A1 discloses a tread having a shoulder portion comprising, per 100 parts by weight of an elastomeric material, 40 to 120 parts by weight of a filler comprising from 50 to 100% by weight of carbon black and from 0 to 50% of silica.

However, there is a need for further improvement in satisfying both handling stability and wet grip performance.

### CITATION LIST

### PATENT LITERATURE

Patent Literature 1: JP 2015-13606 A

### SUMMARY OF INVENTION

### TECHNICAL PROBLEM

The present invention aims to solve the problem and provide a pneumatic tire which provides a balanced improvement of handling stability and grip performance.

### SOLUTION TO PROBLEM

The present invention relates to a pneumatic tire, including a tread portion, the tread portion having at least three main circumferential grooves extending in a circumferential direction of the tire and at least four land portions separated by the main circumferential grooves and including shoulder land portions located on axially outermost sides of the tire,
at least one of the shoulder land portions having horizontal shoulder grooves extending in an axis direction of the tire,
each horizontal shoulder groove having, in a tread contact area, a tire axial length of 10 to 30% of a tread width and a tire circumferential distance between the adjacent horizontal shoulder grooves of 20 to 60% of the tread width,
the shoulder land portions including a rubber composition containing, per 100 parts by mass of a rubber component therein, at least 40 parts by mass of carbon black and at least 30 parts by mass of silica.

Preferably, the rubber composition of the shoulder land portions contains, per 100 parts by mass of the rubber component, at least 50 parts by mass of carbon black.

### ADVANTAGEOUS EFFECTS OF INVENTION

The pneumatic tire of the present invention includes a tread portion which has at least three main circumferential grooves extending in the circumferential direction of the tire and at least four land portions separated by the main circumferential grooves and including shoulder land portions located on the axially outermost sides of the tire, wherein at least one of the shoulder land portions has horizontal shoulder grooves extending in the axis direction of the tire; each horizontal shoulder groove has, in the tread contact area, a tire axial length of 10 to 30% of the tread width and a tire circumferential distance between the adjacent horizontal shoulder grooves of 20 to 60% of the tread width; and the shoulder land portions include a rubber composition containing, per 100 parts by mass of the rubber component, at least 40 parts by mass of carbon black and at least 30 parts by mass of silica. Such a pneumatic tire provides a balanced improvement of handling stability and grip performance.

### BRIEF DESCRIPTION OF DRAWINGS

Fig. 1 shows an exemplary development diagram of a tread portion 2 of a pneumatic tire 1 according to the present embodiment.
Fig. 2 shows an exemplary enlarged view of a shoulder land portion 4s of the tread portion 2 of Fig. 1.

### DESCRIPTION OF EMBODIMENTS

The present invention provides a pneumatic tire including a tread portion. The tread portion has at least three main circumferential grooves extending in the circumferential direction of the tire and at least four land portions separated by the main circumferential grooves and including shoulder land portions located on the axially outermost sides of the tire. At least one of the shoulder land portions has horizontal shoulder grooves extending in the axis direction of the tire. Each horizontal shoulder groove has, in the tread contact area, a tire axial length of 10 to 30% of the tread width and a tire circumferential distance between the adjacent horizontal shoulder grooves of 20 to 60% of the tread width. The shoulder land portions include a rubber composition containing, per 100 parts by mass of the rubber component, at least 40 parts by mass of carbon black and at least 30 parts by mass of silica.

The pneumatic tire provides a balanced improvement of handling stability and grip performance. The reason for this effect is not clear but may be explained as follows.

Grip performance may be improved by increasing heat build-up of the rubber compound or by softening the rubber compound to enhance friction. However, if the rubber compound is excessively softened, it disadvantageously provides no rigidity, resulting in reduced handling stability.

It is believed that the present invention provides improved grip performance such as wet grip performance by using a rubber composition having a carbon black content of at least 40 parts by mass and a silica content of at least 30 parts by mass to form shoulder land portions of a tire with increased heat build-up and optionally by adding a softener to reduce the hardness of the rubber composition and, furthermore, that the present invention provides good handling stability by forming in the shoulder land portions horizontal shoulder grooves extending in the axis direction of the tire, and optimizing the tire axial length of the horizontal shoulder grooves and the tire circumferential distance between the adjacent horizontal shoulder grooves to ensure block rigidity. It is believed that due to these effects, a balanced improvement of handling stability and grip performance such as wet grip performance is provided.

Next, an embodiment of the present invention will be described with reference to the drawings.

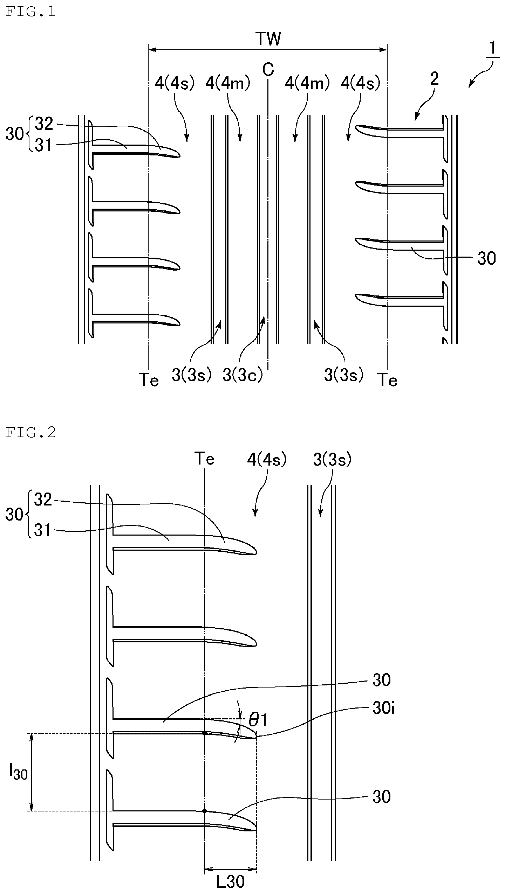

Fig. 1 shows a development diagram of a tread portion 2 of a pneumatic tire (hereinafter also referred to simply as "tire") 1 according to the present embodiment. The pneumatic tire 1 of the present embodiment is suitable for use as a radial tire for passenger vehicles, for example.

As shown in Fig. 1, the tread portion 2 of the tire 1 has three main circumferential grooves 3, including a pair of main shoulder grooves 3s and 3s and a main center groove 3c located therebetween, extending in the circumferential direction of the tire. Although the tire of Fig. 1 has three main circumferential grooves 3, there may be any number of main circumferential grooves 3 that is not less than three, and four or more main circumferential grooves 3 may be provided.

The main shoulder grooves 3s are located on the tread contact edge (Te) side and extending continuously in the tire circumferential direction. The main shoulder grooves 3s of the present embodiment have a linear shape with a substantially constant groove width. The main shoulder grooves 3s may be wavy or zigzag.

The term "tread contact edge (Te)" refers to the axially outermost contact position of the tire 1 determined when a normal load is applied to the tire 1 under normal conditions to contact a plane at a camber angle of 0 degrees.

The term "normal conditions" means a no-load tire with a normal internal pressure mounted on a normal rim (not shown) . The below-mentioned dimensions and other characteristics of tire components are determined under such normal conditions, unless otherwise stated.

The term "normal rim" refers to a rim specified for each tire by the standards in a standard system including standards according to which tires are provided, and may be, for example, "standard rim" in JATMA, "design rim" in TRA, or "measuring rim" in ETRTO.

The term "normal internal pressure" refers to an air pressure specified for each tire by the standards in a standard system including standards according to which tires are provided, and may be "maximum air pressure" in JATMA, a maximum value shown in Table "TIRE LOAD LIMITS AT VARIOUS COLD INFLATION PRESSURES" in TRA, or "inflation pressure" in ETRTO.

The term "normal load" refers to a load specified for each tire by the standards in a standard system including standards according to which tires are provided, and may be "maximum load capacity" in JATMA, a maximum value shown in Table "TIRE LOAD LIMITS AT VARIOUS COLD INFLATION PRESSURES" in TRA, or "load capacity" in ETRTO.

The main center groove 3c is located tire axially inward of each main shoulder groove 3s. The main center groove 3c extends continuously in the tire circumferential direction. The main center groove 3c has a linear shape with a substantially constant groove width. The main center groove 3c of the present embodiment consists of one groove located on the tire equator C. The main center groove 3c may consist of, for example, two grooves located on tire axially opposite sides, respectively, of the tire equator C.

As shown in Fig. 1, the tread portion 2 has four separate land portions 4, including a pair of middle land portions 4m and 4m and a pair of shoulder land portions 4s and 4s. Each middle land portion 4m is located between the main shoulder groove 3s and the main center groove 3c. Although the tire of Fig. 1 has four land portions 4 separated by the main shoulder grooves 3s and the main center groove 3c and extending in the tire circumferential direction, the number of land portions 4 is not particularly limited as long as there are at least four land portions 4 including shoulder land portions 4s located on the axially outermost sides of the tire, and the number may be 5 or more.

Fig. 2 shows an enlarged view of the shoulder land portion 4s. As shows in Fig. 2, the shoulder land portion 4s is located tire axially outward (tire widthwise outward) of the main shoulder groove 3s.

The shoulder land portion 4s has a plurality of horizontal shoulder grooves 30 extending in the tire axis direction (tire width direction). It is sufficient that the horizontal shoulder grooves 30 be provided in one or both of the shoulder land portions 4s located on the axially outermost sides of the tire. The term "groove" as used herein is defined as a groove-shaped structure having a groove width of 2 mm or more.

The horizontal shoulder grooves 30 extend tire axially inward (tire widthwise inward) of the tread contact edge Te. The presence of such horizontal shoulder grooves 30 imparts rigidity in the tire axially inward direction to the shoulder land portion 4s.

Each horizontal shoulder groove 30 has a first portion 31 and a second portion 32. The first portion 31 of the horizontal shoulder grooves 30 extends parallel to the tire axis direction. The second portion 32 of the horizontal shoulder grooves 30 is linked to the tire axially inner side of the first portion 31 and extends in the tire axially inward direction with a gradually increasing angle θ1 to the tire axis direction of the horizontal shoulder grooves 30.

The tire axial length (tire widthwise length) of each horizontal shoulder groove 30 in the tread contact area (between the tread contact edges Te and Te) is 10 to 30% of the tread width. The presence of a plurality of such horizontal shoulder grooves 30 provides good handling stability. The length is preferably 15 to 25 % of the tread width. When the length is not less than the lower limit, the pattern land portions tend to move flexibly to improve ride comfort. When it is not more than the upper limit, handling stability tends to be improved.

The term "tread width" refers to the maximum width in the tire axis direction of the tire contact area determined when the tire with a normal internal pressure mounted on a normal rim at rest is placed vertically to a flat plate and then a normal load is applied to the tire. It corresponds to TW (the distance between the tread contact edges Te and Te) in Fig. 1. The tire axial length of each horizontal shoulder groove means the length projected in the tire axis direction of each horizontal shoulder groove in the tread contact area. It corresponds to L30 in Fig. 2.

The term "tread contact area" refers to the tread area that can contact the ground when a normal load is applied to the tire with a normal internal pressure mounted on a normal rim. Moreover, the tire axially outermost locations of the tread contact area are each defined as "tread contact edge".

The tire circumferential distance between the tire circumferentially adjacent horizontal shoulder grooves 30 and 30 is in the range of 20 to 60% of the tread width in order to improve handling stability. The tire circumferential distance between the tire circumferentially adjacent horizontal shoulder grooves means the distance between the horizontal shoulder grooves adjacent to each other in the tire circumferential direction at the tread contact edge. It corresponds to l₃₀ in Fig. 2.

The shoulder land portions 4s include a rubber composition containing, per 100 parts by mass of the rubber component therein, at least 40 parts by mass of carbon black and at least 30 parts by mass of silica.

It is sufficient that the tread portion 2 include the specified rubber composition at least in the shoulder land portions 4s. The tread may have shoulder land portions 4s including the specified rubber composition and other portions including other rubber compositions, or the entire tread portion 2 may include the specified rubber composition.

The amount of the carbon black per 100 parts by mass of the rubber component in the rubber composition is 40 parts by mass or more, preferably 50 parts by mass or more. When the amount is not less than the lower limit, rigidity and therefore handling stability tend to be improved. The upper limit of the amount is not particularly limited, but in view of properties such as dispersibility and fuel economy, it is preferably 120 parts by mass or less, more preferably 100 parts by mass or less, still more preferably 80 parts by mass or less.

In view of handing stability and grip performance, the carbon black preferably has a nitrogen adsorption specific surface area (N₂SA) of 110 m²/g or more, more preferably 125 m²/g or more, still more preferably 135 m²/g or more. The upper limit of the N₂SA is not particularly limited, but in view of dispersibility, the N₂SA is preferably 180 m²/g or less, more preferably 160 m²/g or less.

The N₂SA of the carbon black is determined in accordance with JIS K6217-2:2001.

Examples of usable carbon black include, but are not limited to, N134, N220, N330, and N550. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used. These may be used alone, or two or more of these may be used in combination.

The amount of the silica per 100 parts by mass of the rubber component in the rubber composition is 30 parts by mass or more, preferably 35 parts by mass or more, more preferably 40 parts by mass or more. With such an amount, good grip performance tends to be obtained. The upper limit of the amount is not particularly limited, but it is preferably 100 parts by mass or less, more preferably 70 parts by mass or less, still more preferably 50 parts by mass or less. When the amount is not more than the upper limit, good silica dispersibility tends to be obtained.

The silica preferably has a nitrogen adsorption specific surface area (N₂SA) of 50 m²/g or more, more preferably 80 m²/g or more, still more preferably 115 m²/g or more, further preferably 150 m²/g or more. When the N₂SA is not less than the lower limit, good dry and wet braking performance tends to be obtained. The N₂SA is also preferably 400 m²/g or less, more preferably 270 m²/g or less, still more preferably 250 m²/g or less. When the N₂SA is not more than the upper limit, good silica dispersibility tends to be obtained.

The N₂SA of the silica is measured by the BET method in accordance with ASTM D3037-93.

Examples of the silica include, but are not limited to, dry silica (anhydrous silica) and wet silica (hydrous silica) . Wet silica (hydrous silica) is preferred because it contains a large number of silanol groups. Commercial products available from Degussa, Rhodia, Tosoh Silica Corporation, Solvay Japan, Tokuyama Corporation, etc. may be used. These may be used alone, or two or more of these may be used in combination.

In addition to the carbon black and silica, the rubber composition may contain additional fillers. Examples of such additional fillers include calcium carbonate, talc, alumina, clay, aluminum hydroxide, and mica.

In view of handing stability and grip performance, the amount of the fillers per 100 parts by mass of the rubber component in the rubber composition is preferably 30 to 180 parts by mass, more preferably 35 to 130 parts by mass.

The rubber composition preferably contains a silane coupling agent in addition to the silica.

Any silane coupling agent conventionally used in combination with silica in the rubber industry can be used, and examples include, but are not limited to: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. These may be used alone, or two or more of these may be used in combination. Among these, sulfide or mercapto silane coupling agents are preferred.

The amount of the silane coupling agent, if present, per 100 parts by mass of the silica in the rubber composition is preferably 2 parts by mass or more, more preferably 5 parts by mass or more. When the amount is not less than the lower limit, the added silane coupling agent tends to produce its effect. The amount is also preferably 20 parts by mass or less, more preferably 15 parts by mass or less. When the amount is not more than the upper limit, an effect commensurate with the added amount and good processability during kneading tend to be obtained.

Examples of materials that may be used as the rubber component include diene rubbers such as natural rubber (NR), polyisoprene rubber (IR), polybutadiene rubber (BR), styrene-butadiene rubber (SBR), styrene-isoprene-butadiene rubber (SIBR), ethylene-propylene-diene rubber (EPDM), chloroprene rubber (CR), acrylonitrile butadiene rubber (NBR), and butyl rubber (IIR). The rubber component may be a single rubber or a combination of two or more rubbers. In order to obtain a good balance of grip performance and abrasion resistance, NR, BR, and SBR are preferred among these, with SBR and/or BR being more preferred.

Any SBR may be used, including, for example, emulsion-polymerized styrene-butadiene rubber (E-SBR) and solution-polymerized styrene-butadiene rubber (S-SBR) . These may be used alone, or two or more of these may be used in combination.

The amount of the SBR based on 100% by mass of the rubber component in the rubber composition is preferably 40% by mass or more, more preferably 60% by mass or more, still more preferably 80% by mass or more. When the amount is not less than the lower limit, good handling stability and grip performance tend to be obtained. Moreover, the upper limit of the amount of the SBR is preferably 95% by mass or less.

The SBR preferably has a vinyl content of 20% by mass or higher, more preferably 30% by mass or higher, still more preferably 35% by mass or higher, but preferably 70% by mass or lower, more preferably 60% by mass or lower, still more preferably 50% by mass or lower. When the vinyl content falls within the range indicated above, good handling stability and grip performance tend to be obtained.

The vinyl content (1,2-butadiene unit content) of the SBR can be determined by infrared absorption spectrometry.

The SBR preferably has a styrene content of 10% by mass or higher, more preferably 25% by mass or higher, still more preferably 35% by mass or higher, but preferably 70% by mass or lower, more preferably 60% by mass or lower. When the styrene content falls within the range indicated above, good handling stability and grip performance tend to be obtained.

The styrene content of the SBR can be determined by ¹H-NMR analysis.

When the SBR is a combination of a high molecular weight SBR and a low molecular weight SBR, the high molecular weight SBR preferably has a weight average molecular weight (Mw) of 400,000 or more, more preferably 700,000 or more, still more preferably 900,000 or more, but preferably 1,800,000 or less, more preferably 1,500,000 or less, still more preferably 1,300, 000 or less, while the low molecular weight SBR preferably has a weight average molecular weight (Mw) of 1,000 or more, more preferably 3,000 or more, still more preferably 5,000 or more, but preferably 50,000 or less, more preferably 30,000 or less, still more preferably 12,000 or less. With a combination of such high and low molecular weight SBRs, good handling stability and grip performance tend to be obtained.

The Mw of the SBR can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

When the SBR is a combination of a high molecular weight SBR and a low molecular weight SBR, the ratio of the amount of the high molecular weight SBR to the amount of the low molecular weight SBR is preferably 90/10 to 40/60, more preferably 80/20 to 50/50, still more preferably 70/30 to 60/40 (by mass), from the standpoints of handling stability and grip performance.

The SBR may be either an unmodified or modified SBR. The modified SBR may be any SBR having a functional group interactive with a filler such as silica. For example, it may be a chain end-modified SBR obtained by modifying at least one chain end of SBR with a compound (modifier) having the functional group (i.e., a chain end-modified SBR terminated with the functional group) ; a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); or a chain end-modified SBR that has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Preferred among these are amino (preferably amino whose hydrogen atom is replaced with a C1-C6 alkyl group), alkoxy (preferably C1-C6 alkoxy), alkoxysilyl (preferably C1-C6 alkoxysilyl), and amide groups.

Examples of modifiers that may be used in the modified SBR include: polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds containing amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-ω-laurilolactam, N-methyl-β-propiolactam, and N-phenyl-β-propiolactam; and

N,N-bis(2,3-epoxypropoxy)aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone.

The modification with these compounds (modifiers) can be carried out by known methods.

The SBR may be a commercial product manufactured or sold by, for example, Sumitomo Chemical Co., Ltd., JSR Corporation, Asahi Kasei Corporation, or Zeon Corporation.

Any BR may be used, including high-cis BR, low-cis BR, and BR containing syndiotactic polybutadiene crystals. These may be used alone, or two or more of these may be used in combination.

The amount of the BR, if present, based on 100% by mass of the rubber component is preferably 5% by mass or more, more preferably 10% by mass or more, but is preferably 40% by mass or less, more preferably 30% by mass or less, still more preferably 20% by mass or less. When the amount falls within the range indicated above, good handling stability and dry and wet braking performance tend to be obtained.

The BR preferably has a cis content of 90% by mass or higher, more preferably 95% by mass or higher, still more preferably 98% by mass or higher. The upper limit of the cis content is not particularly limited. When the cis content falls within the range indicated above, a better effect tends to be obtained.

The cis content of the BR can be determined by infrared absorption spectrometry.

The BR may be either an unmodified or modified BR. Examples of the modified BR include those into which the above-mentioned functional groups are introduced.

The BR may be a commercial product available from, for example, Ube Industries, Ltd., JSR Corporation, Asahi Kasei Corporation, or Zeon Corporation.

The rubber composition preferably contains a softener (softener that is liquid at room temperature (25°C)) such as an oil or a liquid diene polymer, more preferably an oil.

The amount of the oil per 100 parts by mass of the rubber component in the rubber composition is preferably 30 parts by mass or more, more preferably 40 parts by mass or more, still more preferably 50 parts by mass or more, but is preferably 100 parts by mass or less, more preferably 80 parts by mass or less, still more preferably 65 parts by mass or less. When the amount is not less than the lower limit, good processability and grip performance tend to be obtained. When it is not more than the upper limit, good handling stability tends to be obtained. The amount of the oil herein includes the amount of the oil contained in oil extended rubber.

Examples of the oil include process oils such as paraffinic, aromatic, and naphthenic process oils.

The liquid diene polymer preferably has a polystyrene equivalent weight average molecular weight (Mw) of 1.0 × 10³ to 2.0 × 10⁵, more preferably 3.0 × 10³ to 1.5 × 10⁴, as measured by gel permeation chromatography (GPC) . When the Mw is not less than the lower limit, good abrasion resistance and tensile properties tend to be obtained, thereby ensuring sufficient durability, while when the Mw is not more than the upper limit, the polymer solution tends to have a good viscosity, resulting in excellent productivity.

In the present invention, the Mw of the liquid diene polymer is determined by gel permeation chromatography (GPC) relative to polystyrene standards.

Examples of the liquid diene polymer include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene butadiene copolymers. The chain end or backbone of these polymers may be modified with polar groups. Among these, liquid IR or liquid SBR is preferred.

In view of the balance between handling stability and grip performance, the amount of the softener (the total softener) per 100 parts by mass of the rubber component in the rubber composition is preferably 30 to 100 parts by mass, more preferably 40 to 80 parts by mass, still more preferably 50 to 65 parts by mass. The amount of the softener herein includes the amount of the oil contained in oil extended rubber.

The rubber composition may contain a resin that is solid at room temperature (25°C). The amount of the resin per 100 parts by mass of the rubber component is preferably 3 to 50 parts by mass, more preferably 7 to 40 parts by mass.

Examples of the resin include aromatic vinyl polymers, coumarone-indene resins, indene resins, rosin resins, terpene resins, and acrylic resins. Commercial products available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX energy, Arakawa Chemical Industries, Ltd., Taoka Chemical Co., Ltd., Toagosei Co., Ltd., etc. may be used. These may be used alone, or two or more of these may be used in combination. Among these, aromatic vinyl polymers, coumarone-indene resins, terpene resins, and rosin resins are preferred.

Examples of the aromatic vinyl polymers include resins produced by polymerization of α-methylstyrene and/or styrene, such as styrene homopolymers, α-methylstyrene homopolymers, and copolymers of α-methylstyrene and styrene. Among these, copolymers of α-methylstyrene and styrene are preferred.

The term "coumarone-indene resins" refers to resins that contain coumarone and indene as main monomer components forming the skeleton (backbone) of the resins. Examples of monomer components other than coumarone and indene which may be contained in the skeleton include styrene, α-methylstyrene, methylindene, and vinyltoluene.

The term "indene resins" refers to resins that contain indene as a main monomer component forming the skeleton (backbone) of the resins.

The rosin resins (rosins) can be classified based on whether they are modified or not into non-modified rosins (unmodified rosins) and modified rosins (rosin derivatives). Examples of the non-modified rosins include tall rosins (synonym: tall oil rosins), gum rosins, and wood rosins. The term "modified rosins" refers to modified products of non-modified rosins, and examples include disproportionated rosins, polymerized rosins, hydrogenated rosins, and other chemically-modified rosins such as rosin esters, unsaturated carboxylic acid-modified rosins, unsaturated carboxylic acid-modified rosin esters, rosin amide compounds, and rosin amine salts.

Rosin resins having a carboxyl content that is not excessively high and an appropriate acid number are preferred. Specifically, the acid number of the rosin resins is usually more than 0 mg KOH/g, but, for example, not more than 200 mg KOH/g, preferably not more than 100 mg KOH/g, more preferably not more than 30 mg KOH/g, still more preferably not more than 10 mg KOH/g.

The acid number can be measured as described later in EXAMPLES. Rosins, e.g. having an excessively high acid number, may be subjected to known esterification processes to reduce their carboxyl content and adjust their acid number to the range indicated above.

Examples of the terpene resins include polyterpene resins produced by polymerization of terpene compounds, and aromatic modified terpene resins produced by polymerization of terpene compounds and aromatic compounds. Hydrogenated products of the foregoing resins may also be used.

The term "polyterpene resins" refers to resins produced by polymerization of terpene compounds. The term "terpene compounds" refers to hydrocarbons having a composition represented by (C₅H₈)ₙ and oxygen-containing derivatives thereof, which have a terpene backbone and are classified into monoterpenes (C₁₀H₁₆), sesquiterpenes (C₁₅H₂₄), diterpenes (C₂₀H₃₂), etc. Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Among these, pinene resins are preferred because their polymerization reaction is simple, and they are made from natural pine resin and therefore inexpensive. Pinene resins, which usually contain two isomers, i.e. α-pinene and β-pinene, are classified into β-pinene resins mainly containing β-pinene and α-pinene resins mainly containing α-pinene, depending on the proportions of the components in the resins.

Examples of the aromatic modified terpene resins include terpene phenol resins made from the above-mentioned terpene compounds and phenolic compounds, and terpene styrene resins made from the above-mentioned terpene compounds and styrene compounds. Terpene phenol styrene resins made from the terpene compounds, phenolic compounds, and styrene compounds may also be used. Examples of the phenolic compounds include phenol, bisphenol A, cresol, and xylenol. Examples of the styrene compounds include styrene and α-methylstyrene.

The rubber composition preferably contains sulfur (sulfur vulcanizing agent).

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used. These may be used alone, or two or more of these may be used in combination.

The amount of the sulfur (sulfur vulcanizing agent) per 100 parts by mass of the rubber component is preferably 0.5 parts by mass or more, more preferably 1.0 part by mass or more. When the amount is not less than the lower limit, good handling stability and grip performance tend to be obtained. The upper limit of the amount is not particularly limited, but it is preferably 5.0 parts by mass or less, more preferably 3.0 parts by mass or less, still more preferably 2.5 parts by mass or less .

The rubber composition preferably contains a vulcanization accelerator.

Examples of the vulcanization accelerator include thiazole vulcanization accelerators such as 2-mercaptobenzothiazole, di-2-benzothiazolyl disulfide (DM, 2,2'-dibenzothiazolyl disulfide), and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone, or two or more of these may be used in combination. Among these, sulfenamide and/or guanidine vulcanization accelerators are preferred.

In view of properties such as vulcanized properties, the amount of the vulcanization accelerator per 100 parts by mass of the rubber component is preferably 1.0 part by mass or more, more preferably 2.0 parts by mass or more. The amount is also preferably 8.0 parts by mass or less, more preferably 5.0 parts by mass or less.

The rubber composition may contain a wax.

Examples of the wax include, but are not limited to, petroleum waxes such as paraffin waxes and microcrystalline waxes; naturally-occurring waxes such as plant waxes and animal waxes; and synthetic waxes such as polymers of ethylene, propylene, or other similar monomers. Commercial products available from Ouchi Shinko Chemical Industrial Co., Ltd., Nippon Seiro Co., Ltd., Seiko Chemical Co., Ltd., etc. may be used. These may be used alone, or two or more of these may be used in combination. Among these, petroleum waxes are preferred, with paraffin waxes being more preferred.

The amount of the wax per 100 parts by mass of the rubber component is preferably 0.5 parts by mass or more, more preferably 1 part by mass or more, but is preferably 10 parts by mass or less, more preferably 6 parts by mass or less.

The rubber composition may contain an antioxidant.

Examples of the antioxidant include, but are not limited to: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)propionate] methane. Commercial products available from Seiko Chemical Co., Ltd., Sumitomo Chemical Co., Ltd., Ouchi Shinko Chemical Industrial Co., Ltd., Flexsys, etc. may be used. These may be used alone, or two or more of these may be used in combination. Preferred among these are p-phenylenediamine antioxidants, more preferably N-(1,3-dimethylbutyl)-N'-phenyl-p-phenylenediamine.

The amount of the antioxidant per 100 parts by mass of the rubber component is preferably 0.3 parts by mass or more, more preferably 1 part by mass or more, but is preferably 7 parts by mass or less, more preferably 6 parts by mass or less, still more preferably 5 parts by mass or less.

The rubber composition may contain a fatty acid, particularly stearic acid.

The stearic acid may be a conventional one, and examples include commercial products available from NOF Corporation, Kao Corporation, FUJIFILM Wako Pure Chemical Corporation, and Chiba Fatty Acid Co., Ltd.

The amount of the fatty acid per 100 parts by mass of the rubber component is preferably 0.5 parts by mass or more, more preferably 1 part by mass or more. The amount is also preferably 10 parts by mass or less, more preferably 5 parts by mass or less.

The rubber composition may contain zinc oxide.

The zinc oxide may be a conventional one, and examples include commercial products available from Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide per 100 parts by mass of the rubber component is preferably 0.5 parts by mass or more, more preferably 1 part by mass or more. The amount is also preferably 5 parts by mass or less, more preferably 4 parts by mass or less.

In addition to the above components, the rubber composition may contain additives commonly used in the tire industry, such as surfactants.

The rubber composition may be prepared by known methods, such as by kneading the components using a rubber kneading machine such as an open roll mill, a Banbury mixer, or a kneader, and then vulcanizing the kneaded mixture.

The kneading conditions are as follows. In a base kneading step of kneading additives other than crosslinking agents (vulcanizing agents) and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, and preferably 85 to 110°C. The composition obtained after kneading vulcanizing agents and vulcanization accelerators is usually vulcanized by, for example, press vulcanization. The vulcanization temperature is usually 140 to 190°C, preferably 150 to 185°C.

The pneumatic tire of the present invention can be produced using the rubber composition by usual methods. Specifically, the unvulcanized rubber composition containing the components may be extruded into the shape of a tread (a component that contacts the road such as a monolayer tread or a cap tread of a multi-layer tread) and assembled with other tire components on a tire building machine in a usual manner to build an unvulcanized tire, which may then be heated and pressurized in a vulcanizer to obtain a tire.

The tire may be used as, for example, a tire for passenger vehicles, large passenger vehicles, large SUVs, heavy load vehicles such as trucks and buses, light trucks, or two-wheeled vehicles, or as a racing tire (high performance tire).

### EXAMPLES

The chemicals used in examples and comparative examples are listed below.
SBR1: Nipol NS522 available from Zeon Corporation (styrene content: 39% by mass, vinyl content: 40% by mass, Mw: 1,070,000, oil content: 37.5 parts by mass per 100 parts by mass of rubber solids)
SBR2: TUFDENE 4850 available from Asahi Kasei Corporation (styrene content: 40% by mass, vinyl content: 47% by mass, Mw: 8,000, oil content: 50 parts by mass per 100 parts by mass of rubber solids)
BR: BR150B available from Ube Industries, Ltd. (cis content: 98% by mass)
Silica 1): Ultrasil VN3 available from Evonik Degussa (N₂SA: 172 m²/g)
Silica 2): Ultrasil 360 available from Evonik Degussa (N₂SA: 50 m²/g)
Carbon black 1) : Vulcan 10H available from Cabot (N134, N₂SA: 144 m²/g)
Carbon black 2): Seast N220 available from Mitsubishi Chemical Corporation (N₂SA: 114 m²/g)
Silane coupling agent: Si69 (bis(3-triethoxysilylpropyl)tetrasulfide) available from Degussa
Oil: DIANA PROCESS AH-24 (aromatic process oil) available from Idemitsu Kosan Co., Ltd.
Antioxidant: NOCRAC 6C (N-(1,3-dimethylbutyl)-N'-phenyl-p-phenylenediamine) available from Ouchi Shinko Chemical Industrial Co., Ltd.
Stearic acid: stearic acid available from NOF Corporation
Zinc oxide: zinc oxide #3 available from HakusuiTech Co., Ltd.
Wax: Ozoace 0355 available from Nippon Seiro Co., Ltd.
Sulfur: powdered sulfur available from Tsurumi Chemical Industry Co., Ltd.
Vulcanization accelerator NS: NOCCELER NS (N-tert-butyl-2-benzothiazyl sulfenamide) available from Ouchi Shinko Chemical Industrial Co., Ltd.
Vulcanization accelerator DPG: NOCCELER D (N,N'-diphenylguanidine) available from Ouchi Shinko Chemical Industrial Co., Ltd.

### (Examples and Comparative Examples)

The chemicals other than the sulfur and vulcanization accelerators in the amounts shown in Table 1 were kneaded using a 1.7 L Banbury mixer (Kobe Steel, Ltd.) at 150°C for 5 minutes to give a kneaded mixture. Then, the sulfur and vulcanization accelerators were added to the kneaded mixture, and they were kneaded using an open roll mill at 80°C for 5 minutes to give an unvulcanized rubber composition.

The unvulcanized rubber composition was formed into a tread shape according to the specification shown in Table 2 and assembled with other tire components to build an unvulcanized tire, which was then press-vulcanized at 170°C for 10 minutes to prepare a test tire (size: 195/65R15) having a tread contact area as shown in Figs. 1 and 2.

The test tires prepared as above were evaluated as follows. Table 2 shows the results.

### <Wet grip performance>

The test tire of each example was mounted on each wheel of a front-engine, front-wheel-drive car of 2000 cc displacement made in Japan. The braking distance of the car with an initial speed of 100 km/h under wet asphalt conditions was determined and expressed as an index (wet grip performance index), with Comparative Example 1 set equal to 100. A higher index indicates a shorter braking distance and therefore better wet grip performance.

### <Handling stability>

The test tire of each example was mounted on each wheel of a front-engine, front-wheel-drive car of 2000 cc displacement made in Japan, and a test driver drove the car in a test track under common driving conditions. The driver subjectively evaluated stability of steering control (handling stability). The results are expressed as an index, with Comparative Example 1 set equal to 100. A higher handling stability index indicates better handling stability.

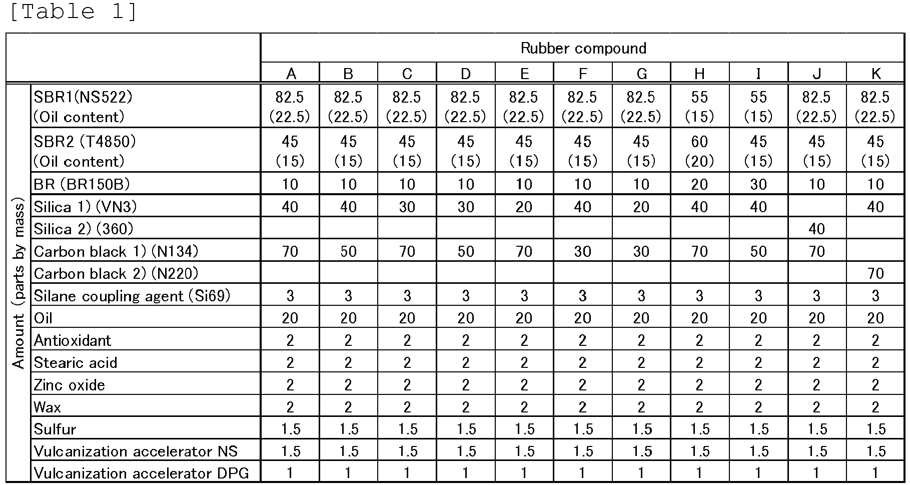

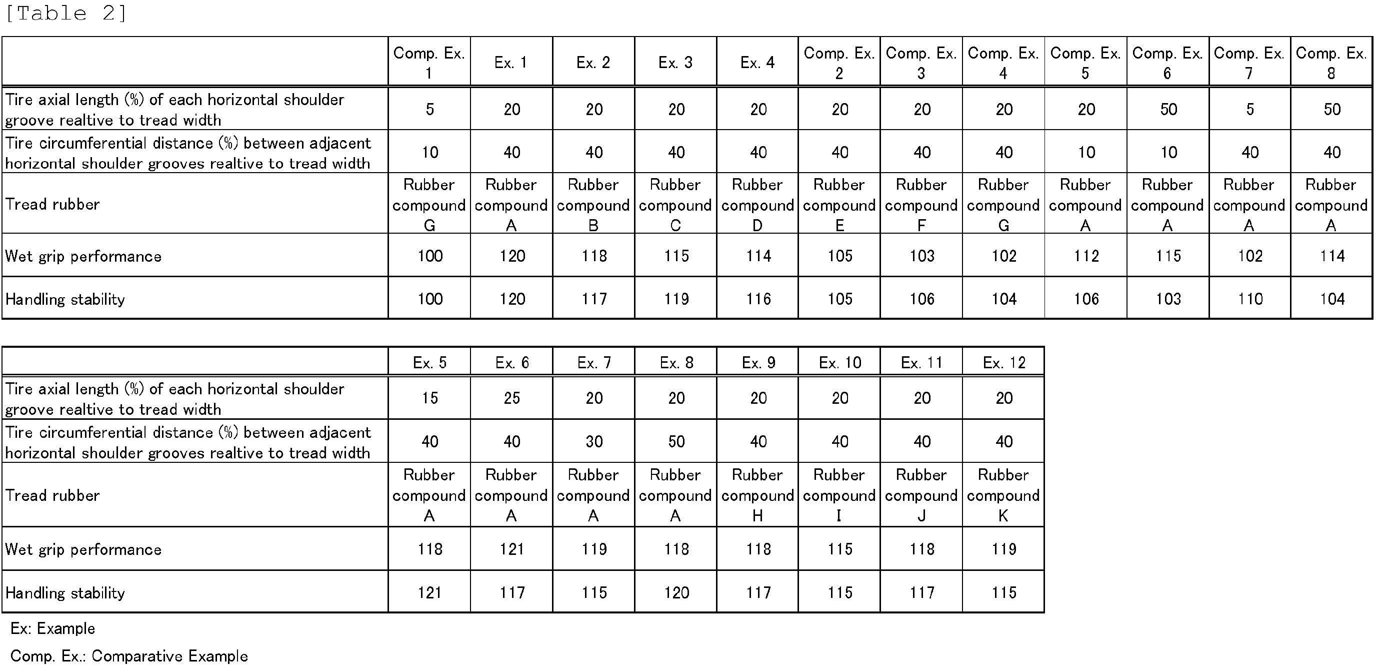

As shown in Tables 1 and 2, a balanced improvement of handling stability and wet grip performance was achieved in the examples which included shoulder land portions with horizontal shoulder grooves extending in the tire axis direction and in which the tire axial length of each horizontal shoulder groove and the tire circumferential distance between the adjacent horizontal shoulder grooves were each within a predetermined range relative to the tread width.

### REFERENCE SIGNS LIST

1: pneumatic tire
2: tread portion
3: main circumferential groove
3s: main shoulder groove
3c: main center groove
4: land portion
4m: middle land portion
4s: shoulder land portion
30: horizontal shoulder groove
30i: tire axially inner end of horizontal shoulder groove 30
L30: tire axial length of one horizontal shoulder groove 30
l₃₀: tire circumferential distance between tire circumferentially adjacent horizontal shoulder grooves 30 and 30
31: first portion
32: second portion
C: tire equator
θ1: angle to tire axis direction of horizontal shoulder groove
TW: tread width

## Claims

1. A pneumatic tire (1), comprising a tread portion (2), the tread portion (2) comprising at least three main circumferential grooves (3, 3s, 3c) extending in a circumferential direction of the tire (1) and at least four land portions (4, 4m, 4s) separated by the main circumferential grooves (3, 3s, 3c) and including shoulder land portions (3s) located on axially outermost sides of the tire (1),
at least one of the shoulder land portions (3s) comprising horizontal shoulder grooves (30) extending in an axis direction of the tire,
each horizontal shoulder groove (30) having, in a tread contact area, a tire axial length (L30) of 10 to 30% of a tread width (TW) and
the shoulder land portions (4s) comprising a rubber composition containing, per 100 parts by mass of a rubber component therein, at least 40 parts by mass of carbon black and at least 30 parts by mass of silica,
**characterized in that** a tire circumferential distance (l₃₀) between the adjacent horizontal shoulder grooves (30) is in the range of 20 to 60% of the tread width (TW).

2. The pneumatic tire (1) according to claim 1, wherein the rubber composition of the shoulder land portions (4s) contains, per 100 parts by mass of the rubber component, at least 50 parts by mass of carbon black.

## Patentansprüche

1. Luftreifen (1) mit einem Laufflächenabschnitt (2), wobei der Laufflächenabschnitt (2) mindestens drei Hauptumfangsrillen (3, 3s, 3c), die sich in einer Umfangsrichtung des Reifens (1) erstrecken, und mindestens vier Landabschnitte (4, 4m, 4s) umfasst, die durch die Hauptumfangsrillen (3, 3s, 3c) getrennt sind und Schulterlandabschnitte (3s) umfassen, die an axial am weitesten außen liegenden Seiten des Reifens (1) angeordnet sind,
mindestens einer der Schulterlandabschnitte (3s) horizontale Schulterrillen (30) umfasst, die sich in einer Achsrichtung des Reifens erstrecken,
wobei jede horizontale Schulterrille (30) in einem Laufflächenkontaktbereich eine Reifenaxiallänge (L30) von 10 bis 30% einer Laufflächenbreite (TW) aufweist, und
wobei die Schulterlandabschnitte (4s) eine Kautschukzusammensetzung umfassen, die pro 100 Masseteile einer Kautschukkomponente darin mindestens 40 Masseteile Ruß und mindestens 30 Masseteile Siliciumdioxid enthält,
**dadurch gekennzeichnet, dass** ein Reifenumfangsabstand (l₃₀) zwischen den benachbarten horizontalen Schulterrillen (30) im Bereich von 20 bis 60% der Laufflächenbreite (TW) liegt.

2. Luftreifen (1) nach Anspruch 1, wobei die Kautschukzusammensetzung der Schulterlandabschnitte (4s) pro 100 Masseteile der Kautschukkomponente mindestens 50 Masseteile Ruß enthält.

## Revendications

1. Bandage pneumatique (1), comprenant une portion formant bande de roulement (2), la portion formant bande de roulement (2) comprenant au moins trois rainures circonférentielles principales (3, 3s, 3c) s'étendant dans une direction circonférentielle du pneumatique (1) et au moins quatre portions en relief (4, 4m, 4s) séparées par les rainures circonférentielles principales (3, 3s, 3c) et incluant des portions en relief d'épaulement (3s) situées sur des côtés axialement les plus à l'extérieur du pneumatique (1),
au moins une des portions en relief d'épaulement (3s) comprenant des rainures d'épaulement horizontales (30) s'étendant dans une direction axiale du pneumatique,
chaque rainure d'épaulement horizontale (30) ayant, dans une zone de contact de bande de roulement, une longueur axiale de pneumatique (L30) de 10 à 30 % d'une largeur de bande de roulement (TW), et
les portions en relief d'épaulement (4s) comprenant une composition de caoutchouc contenant, pour 100 parts en masse d'un composant de caoutchouc à l'intérieur de celle-ci, au moins 40 parts en masse de noir de carbone et au moins 30 parts en masse de silice,
**caractérisé en ce qu'**une distance circonférentielle du pneumatique (I30) entre les rainures d'épaulement horizontales adjacentes (30) est dans la plage de 20 à 60 % de la largeur de bande de roulement (TW).

2. Bandage pneumatique (1) selon la revendication 1, dans lequel la composition de caoutchouc des portions en relief d'épaulement (4s) contient, pour 100 parts en masse du composant de caoutchouc, au moins 50 parts en masse de noir de carbone.
